# EUROPEAN PATENT APPLICATION

(11) **EP 4 009 078 A1**
(43) Date of publication of application: **08.06.2022**
(21) Application number: 20212063.0
(22) Date of filing: 04.12.2020
(51) Int. Cl.: G01S 17/89, G01S 17/93, G01S 7/51

(54) **INLAND RIVER LIDAR NAVIGATION SYSTEM FOR VESSELS AND OPERATION METHOD THEREOF**

(30) Priority: 02.12.2020 TW 109142362
(71) Applicant: Ship and Ocean Industries R&D center, Tamsui 251 New Tapei City (TW)
(72) Inventor: HSU, Ming-Hsiang, 251 New Taipei City (TW); LIAO, Chi-Min, 251 New Taipei City (TW); CHU, Chun-Han, 251 New Taipei City (TW)
(74) Representative: Wittmann, Günther

(57) **Abstract**

This invention discloses an inland river Lidar navigation system for vessels, comprising a receiver, a memory, a processor and a display. The processor coupled to the receiver and the memory, and the display coupled to the processor. Overall, the inland river navigation Lidar system based on Lidar is able to make use of the preset map data identification uncalculatable points of a point cloud of the predetermined procedure, thereby removing of the alignment step in traditional method can be omitted. Therefore, the processing speed can be improved.

## Description

### TECHNICAL FIELD

The present invention is an inland river Lidar navigation system for vessels and operation thereof. Specifically, this invention indicates a system used for Lidar navigation when vessels sail on river inland.

### BACKGROUND OF RELATED ARTS

Navigation for path plane is a basic issue for autonomous unmanned vessels. In other words, the central processor of a computer demands and decides the path which the vessels should follow and reach the target point, avoiding any collisions or decreasing the possibility per se in the sailing environment. According to the several kinds of disturbance (reflections of water or streams of water and wind) on the surface of water, the challenge of abilities to renew or to update the best paths in a short period, even in real time that the environment keeps in changing becomes harder.

For instance, a vessel sails, and the obstacles of the sailing environment may keep changing their locations or shapes above/under water by time passes. Moreover, the large floating obstacles shift the location due to the flow of water. On the other hand, the location of the vessel may change simultaneously. Therefore, the speed of processing the sensor and location data is required being in real time and continuous, thus to detect the relative location changes between the self (usually, the autonomous unmanned vessel) and detected stuffs (obstacles above water), for correcting and adjusting the path in tolerable time.

### SUMMARY

To resolve the drawbacks of the prior arts, the present invention discloses an inland river Lidar navigation system and operation method for vessel. Specifically, this invention indicates a system used for Lidar navigation when vessels sail on river inland. The advantage of the present invention is to compute the sensor data continuously and in real time. In fact, the preset map data helps to discard the unessential points which are ignorable in calculation preparation. Therefore, the present invention skips the Alignment Step (the step of checking the target is true or false), and significantly increases the computing speed.

At least one embodiment of the present invention is about an inland river Lidar navigation system which comprises a receiver, a memory, a processor and a display for vessel. The abovementioned receiver, memory and display are connected with the processor.

On the other hand, the other at least one embodiment of the present invention is about an operation method of inland river Lidar navigation system for vessel. First of all, receive the plurality of point cloud generated from the at least one sensor which is configured on the vessel. The processor integrates the plurality of point cloud into the at least one first point cloud set, and then defines the at least one second point cloud set which is required to be processed via the at least one first point cloud set and the map data. After then, compute a cluster by merging each of the at least one second point cloud set which are closed to each other, and forming the at least one entity. Furthermore, process the at least one entity to input at least one mark in the map data, and display the at least one mark and the map data on the display. That is, the map data will show the at least one obstacle which is marked by any of the universally unique at least one mark.

The at least one embodiment of the present invention is featured in the preceding procedure of the point clouds. Specifically, the generation of a height threshold via the at least one terrestrial information will be down firstly. On the next step, this embodiment projects the at least one first point cloud set on the map data while generating a border via the at least one water information. At last, this embodiment defines the at least one second point cloud set via discarding the at least one first point cloud set which is higher or equally higher than the height threshold and across the border respectively.

The abovementioned summary of the present disclosure relates to provide a basic description of the various aspects and features of the invention. The invention is not to be construed as being limited to the details of the present disclosure.

### BRIEF DESCRIPTION OF THE DRAWINGS

FIG. 1 is a schematic diagram of an embodiment of the present invention.
FIG. 2 is a flow chart of an embodiment of the present invention.
FIG. 3 is a structural diagram of a part of embodiments of the present invention.
FIG. 4 is a schematic diagram of output map data of a part of embodiments of the present invention.
FIG. 5 is another schematic diagram of output map data of a part of embodiments of the present invention.
FIG. 6 is the other schematic diagram of output map data of a part of embodiments of the present invention.

### DETAILED DESCRIPTION OF THE INVENTION

To clarify the purpose, technical solutions, and the advantages of the disclosure, embodiments of the present disclosure will now be described more fully hereinafter with reference to the accompanying drawings.

At least one embodiment of the present invention discloses an inland river Lidar navigation system and operation method for vessel. Specifically, this embodiment indicates a system used for Lidar navigation when vessels sail on river inland.

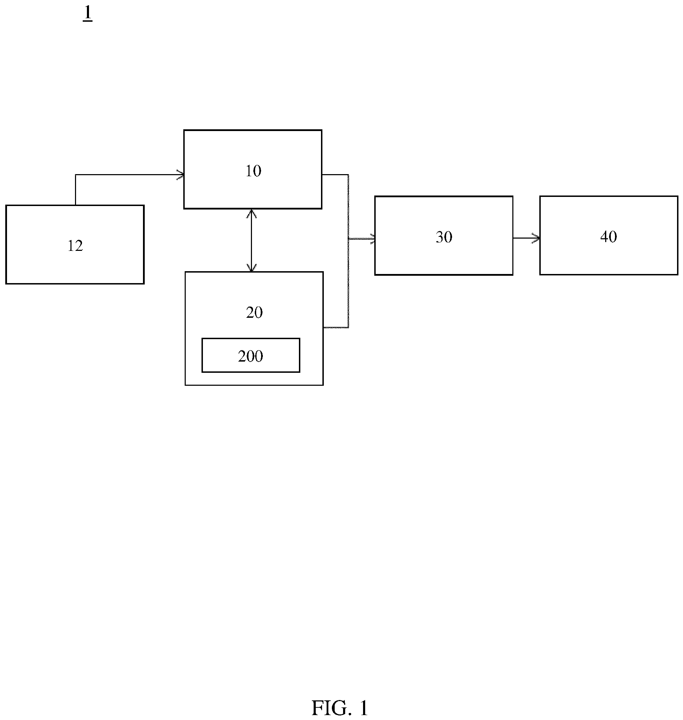

Please refer to FIG. 1, FIG. 1 is a schematic diagram of an embodiment of the present invention. The inland river Lidar navigation system 1 for vessel 100 comprises a receiver 10, a memory 20, a processor 30 and a display 40. The receiver 10, memory 20, and display 40 connect to processor 30 in this embodiment.

The receiver 10 illustrated in FIG. 1 receives the point cloud which is collected from the at least one sensor 12, and saves or sends one or more point clouds to the memory 20 or processor 30 alternatively. In this embodiment,, the sensors 12 is configured on a vessel 100. The abovementioned sensors 12 are used for collecting point clouds along the path which the vessel 100 sails. The sensors 12 is a group selected from a plurality of cameras, video camera, depth sensor or any of them, even the light sensor such as Laser sensor. For example, VLP-16, VLP-32 LiDAR^{™} of Velodyne^{™} Lidar Inc. or S3, M8 LiDAR of Quanergy^{™} Systems. Furthermore, the communication methods of transferring/receiving the point cloud is also capable for using different protocols such as User Datagram Protocol (UDP). The formats of the point clouds can be different, due to the different uses.

The memory 20 of FIG. 1 is used to store the point clouds and map data 200. The memory 20 of the present embodiment is selected form any of the large capacity memory (Fixed/Random access). For instance, the mechanism of memory 20 of the present embodiment is selected form the combinations of volatile memory, the non-volatile, magnetic storage, semiconductor memory, optical memory, phase change or non-phase change memory. The memory 20 is provided to save any kinds of data which may be required by processor 30, or one or more programs. The invention is not limited thereto. On the other hand, the map data mentioned in this embodiment is able to be an electronic navigational chart (ENC), but it is not limited, either. The map data also can be regarded as computer readable map forms such as satellite imagery maps including at least one terrestrial information (e.g. building or bridges), at least one water information (e.g. river or sailing paths), Digital line graph (DLG), Digital raster graphics (DRG) or Digital orthophoto quadrangle (DOQ).

As shown in FIG. 1, the processor 30 is set to be: read and save every point cloud which is collected and calculate at least one first point cloud set via the aforementioned point cloud. Furthermore, the processor 30 discard the ignorable point cloud in the at least one point cloud set therefore to define at least one second point cloud set. The at least one second point cloud set is used to generate at least one entity and make the display 40 shows the map data 200 which comprises at least one mark of obstacles above water. It is should be noticed that the processor 30 is designed for communicating with the memory 20 and being able to save/read data. For example, one or more point cloud, map data 200 or calculating commands. In addition, this embodiment does not define any type which the processor 30 and display 40 can be. The processor 30 can be a microprocessor (MPU) or the other capable processors. The display 40 of the present embodiment can be a computer display or just a screen. The television display/screen, visual reality (VR) display/screen or even a projector are also capable for being display 40.

In the possible embodiment of the present application, to increase the accuracy of the second point cloud set, receiver 10 further comprises a filter which is able to filter the error sensing data.

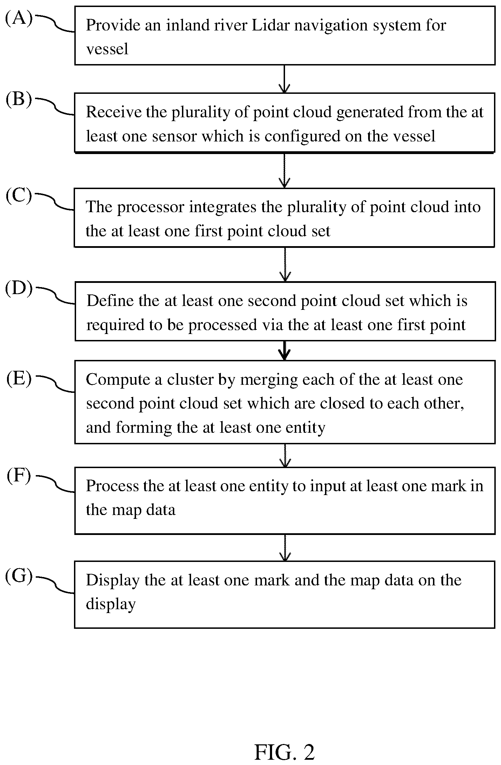

FIG. 2-6 of the present invention describe the detailed mechanism of the embodiments mentioned above, please read as follows.

First of all, FIG. 2 is a flow chart of an embodiment of the present invention. The operation method of step (A) is to use the inland river Lidar navigation system 1 illustrated in FIG. 1. In step (B), at least one sensor 12 which is configured on vessel 100 collects a plurality of point cloud, and in step (C), the processor 30 integrates the plurality of point cloud mentioned in step (B), therefore to generate at least one first point cloud set. Moreover, this embodiment will define at least one second point cloud via map data 200. The at least one second point cloud here is a group of a part of the aforementioned at least one first point cloud. Next step, the step (E) of this embodiment computes a cluster by merging each of the at least one second point cloud set which are closed to each other, and forming the at least one entity. In step (G), the at least one entity is used to generate at least one mark 300 and input them into the map data 200. The at least one mark 300 represents at least one obstacle above water and any of the at least one mark 300 is universally unique.

The step (D) of this embodiment further comprises steps (D1)-(D4) which are used for discarding the unnecessary at least one first point cloud set. In step (D1), this embodiment generates a height threshold via the at least one terrestrial information. Step (D2) of the present embodiment projects the at least one first point cloud set on the map data 200, and step (D3) generates a border via the at least one water information. After that, step (D4) of the embodiment defines the at least one second point cloud set via discarding the at least one first point cloud set which is higher or equally higher than the height threshold and across the border in steps (D1) and (D3) respectively. Specifically, steps (D1)-(D4) uses Mathematical Morphology such as Iterative Method, the person having ordinary skill in the art should understand this method to calculate and programmed. In this embodiment, the height threshold is variable and changed with the at least one terrestrial information (e.g. the height change of bridge). Similarly, the border is also variable and changed with the at least one water information (e.g. the river width or curves). The definition of the at least one terrestrial information and the at least one water information are not limited in the other possible embodiments thereto.

According to the information provided above, "generating a height threshold" in step (D1) is related to the object data selection program of the at least one terrestrial information. For instance, selecting the overlapped object data between the terrestrial information and the water information such as bridges or setting the object data which is the nearest to the water surface are able to be used for ensure the height threshold mentioned above.

On the other hand, the "computing a cluster" in step (E) uses an Iterative Method which is related to Kd-tree (K-dimensional tree) algorithm in this embodiment. Moreover, the step (E) of the present embodiment further comprises steps (E1)-(E3). The step (E1) chooses a space point rendered from the at least one second point cloud set, and the step (E2) calculates a distance between any point of the at least one second point cloud set to the space point via the Kd-tree (K-dimensional tree) algorithm. Step (E3) classifies the point which has the distance shorter or equally shorter than a distance threshold into the same entity, and step (E4) repeats executing steps (E1)-(E3) until all of the points of the at least one second point set are classified, generating plurality of the entity. The abovementioned distance threshold may be a constant and just set by the requirement, the present invention is not limited thereto.

In this embodiment, step (E) further comprises a step (E21) which is between the step (E2) and (E3). In step (E21), this step gives priority for concentrating the distances of the points of the at least one second point cloud set which is shorter or equally shorter than an entity threshold as the same entity, then repeating steps (E1) and (E21) respectively until the at least one second point cloud set is separated into the plurality of entities via the entity threshold. After that, the step (E3) classifies the point into its own entity in all entities. Simultaneously, the entity threshold is equal to the max value of capable distance. In practice, the capable distance means the estimated value which the value of the distance relates to the identified outlier. Therefore, the inland river Lidar navigation system 1 precisely classifies and selects the entities having high density of the second point cloud set in step (E3).

In this embodiment, step (F) further comprises steps (F1)-(F3), thus to calculate every single entity mentioned above. The step (F1) calculates average value of all position coordinates of any of the entity, defining the position coordinate of gravity point of any of the entity and until finishing calculating all of the entities. The step (F2) features and represents an object data of the position coordinates of the plurality of gravity point. Step (F3) generates the at least one mark via the object data. It shall be noticed that the format which is capable for this embodiment can follow the rules of NEMA-0180, NEMA-0182 or NEMA-0183, e.g. $OBS,<1>,<2>,<3>,<4>,<2>,<3>,<4>,...,<2>,<3>,<4>,^{∗}<5>.
The table 1 as follows:

**Table 1**

| |
|---|
| <1> The number of obstacles |
| <2> The order of obstacles#a |
| <3> obstacle#a the **X** component of vector to vessel |
| <4> obstacle#a the **Y** component of vector to vessel |
| <5> Checksum |

The person having ordinary skill in the art should understand that the definitions in table 1 comprise the coordinates and numbers of obstacles, therefore to input at least one correct mark 300 into map data 200. Of course, the other format is also suitable for this invention; it should not be limited thereto.

The mark 300 in step (F3) comprises an object distance 310 and an object data 320 in practice, but it is not limited thereto. In the other possible embodiment, the mark 300 further comprises any warning attribute such as the object color. The object distance 310 in this embodiment is the real distance between vessel 100 and the obstacle. The object data 320 is any shaped space/area universe, representing the location and size of obstacle.

The displaying of the map data 200 may show not only the mark 300 but alternatively show the other information in indication lines (e.g. the relative direction between the sensing area of sensors 12 and obstacles). For identifying the mark 300 of the map data 200 efficiently, before the step (G) is executed, some embodiments will color object distance 310 and object data 320 via the attribute per se, such as red for warning, or yellow for the large-sized obstacle. The attribute mentioned above has different meaning in object distance 310 and object data 320. The attribute of object distance 310 may comprise near or far. The attribute of object data 320 may comprise different sizes of obstacles (small, middle or large). The other attribute also can be added, this invention is not limited thereto. On the other hand, the above mentioned coloring method may be designed to follow a stable color chart or randomly give. The single attribute matches with a single color, this invention is not limited, either.

In the possible embodiment, if the number of the first point cloud set is overloaded, the embodiment may alternatively execute steps (B 1)-(B2). The step (B1) reads a first silhouette point in a constant area and rest of second silhouette point out of the constant area. Step (B2) calculates the distance between any of the point of the first silhouette point to any of the point of the second silhouette point. The "overloaded" here means the relationship between the processing speed limit of processor 30 and number of point cloud.

When the number of the first point cloud set is satisfied, processor 30 matches and computes the first point cloud set and the map data 200. This "matches and computes" may choose the Normal Distributions Transform (NDT) algorithm or Iterative Closest Point (ICP) algorithm. The "satisfied" here depends on the algorithm which is/are used, this invention is not limited thereto.

In the other embodiment, step (B) is used to separate the point cloud for discarding the invalid point cloud (e.g. the reflection of water). The "separate" mentioned here can be realized by RANdom Sample Consensus (RANSAC) algorithm.

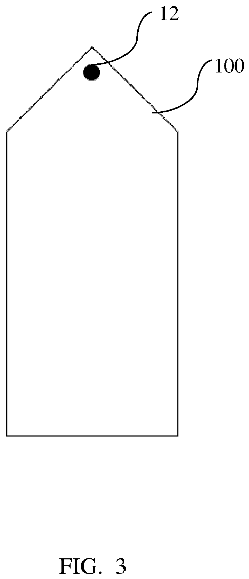

Please refer to FIG. 3. FIG. 3 is a structural diagram of a part of embodiments of the present invention. As shown in FIG. 3, vessel 100 comprises the inland river Lidar navigation system 1. In current embodiment, the vessel 100 is able to be speedboats, fishing boats, sightseeing boats and other small water vessels, this invention is not limited thereto. This embodiment can also be configured on autonomous unmanned ships such as battleships, cruise ships or the other large water vessels. When the vessel 100 is a large vessel, the number of sensor 12 can be one or more. Sensor 12 is able to be configured on the bow of the vessel 100, and the abovementioned number of the sensors 12 is decided by the water width (e.g. 1 sensor 12 for each 1.8m width of water).

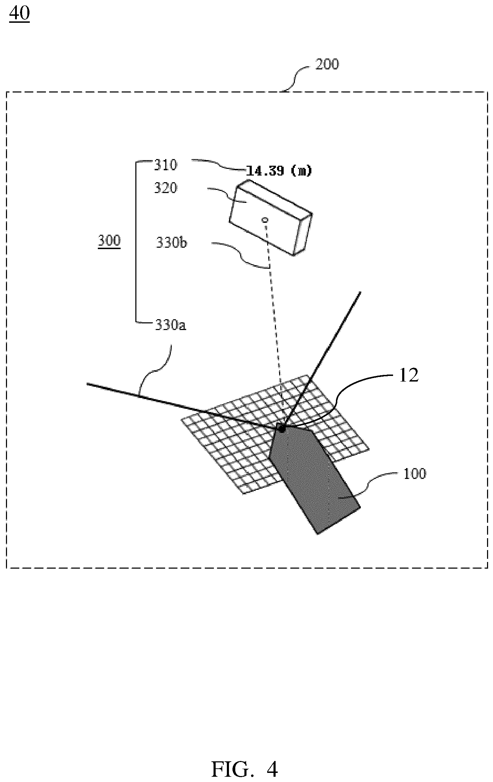

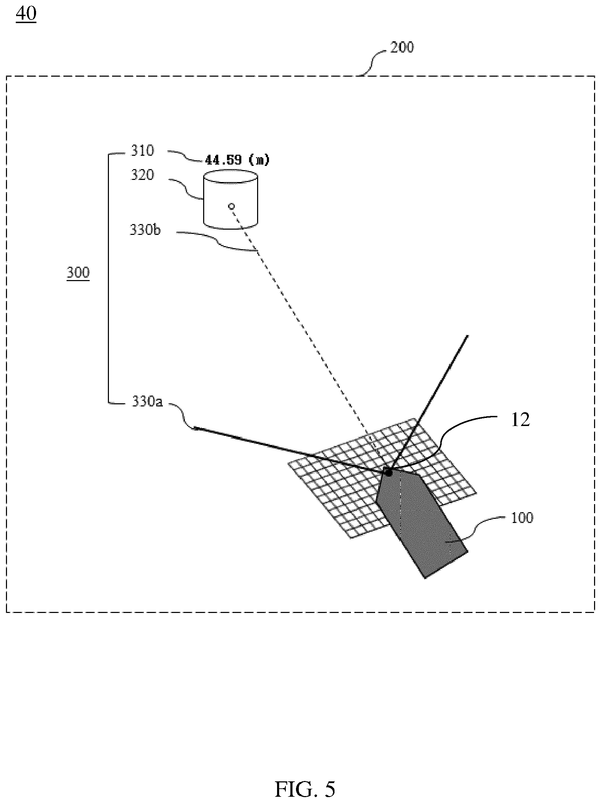

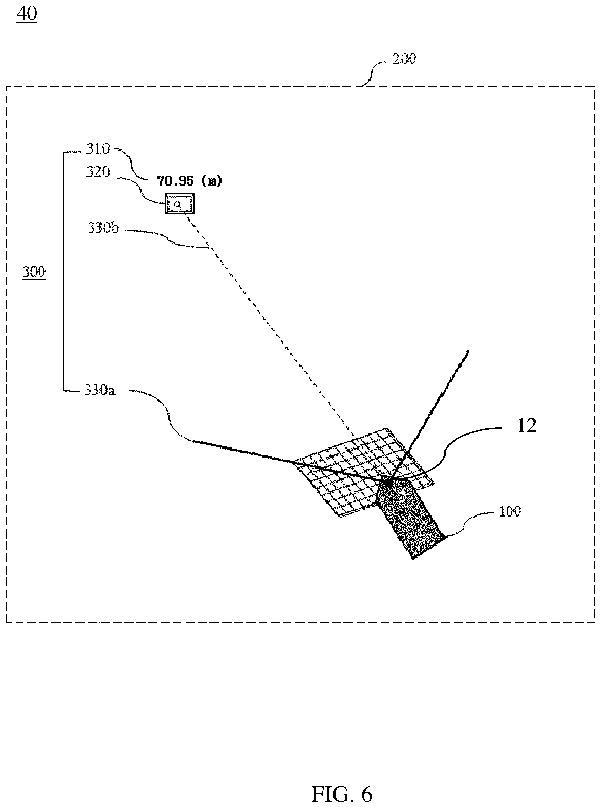

Please refer to FIG. 4-FIG. 6 accompany with FIG. 2-FIG. 3. FIG. 4-FIG. 6 is the schematic diagram which shows the map data including vessel 100 and locations of the at least one mark 300 (obstacle) on display 40 in real time. FIG. 4 illustrates the situation when the obstacle is near to the vessel 100. FIG. 5 illustrate that the situation when the obstacle is in a middle range from the vessel 100. FIG.6 shows the obstacle is far from the vessel 100. The definitions of "near", "middle range" and "far" are not limited, it depends on the kind of vessel 100. In this embodiment, the sensor 12 is VLP-16 LiDAR manufactured by Velodyne^{™} Lidar Inc.. The data collected by sensor 12 is sent to receiver 10 by using User Datagram Protocol (UDP), analyzing at least one feature data (like distances of any angle or any radiation to certain point cloud). The processor 30 generates the first point cloud set via the abovementioned feature data, and the first point cloud set in this embodiment is recorded in Cartesian coordinate system.

For increasing the computing speed, this invention locates the point cloud which is necessary and discards the point cloud which is unnecessary. Therefore, the processor 30 can only spend the calculating time on essential point cloud, significantly decreases the load of computing. The present invention can be used on autonomous unmanned vessels, considering about the disturbance happed on the surface of water, the path should be continuously and currently renewed via the sensing data in real time. In the present invention, the Kd-tree (K-dimensional tree) algorithm provides the alignment step for the second point cloud set, and output the coordinates of gravity point of every alignment (entity), generating marks 300 of the map data 200 perfectly. As shown in FIG. 4-6, the present embodiment show that mark 300 comprises the object distance 310 (m) for representing the real distance between the obstacle and vessel 100, and the object data 320 for representing the size of the obstacle. Furthermore, this embodiment marks the sensing area of sensor 12 by hint line 330a and indicates the relative direction between the sensor 12 and the obstacle by hint line 330b. The hint line 330a is generated by processor 30 and the hint line 330b is generated based on the shortest distance between the aforementioned gravity point and the sensor 12.

As understood by a person skilled in the art, the foregoing preferred embodiments of the present invention are illustrated of the present invention rather than limiting of the present invention. It is intended to cover various modifications and similar arrangements included within the spirit and scope of the appended claims, the scope of which should be accorded the broadest interpretation so as to encompass all such modifications and similar structure. While the preferred embodiment of the invention has been illustrated and described, it will be appreciated that various changes can be made therein without departing from the spirit and scope of the invention.

## Claims

1. An inland river Lidar navigation system for vessel, comprising:
a receiver, receiving a plurality of point cloud via at least one sensor;
a memory, saving the plurality of point cloud and a map data, the map data comprises at least one terrestrial information and at least one water information;
a processor, connecting to the receiver and the memory; and
a display, connecting to the processor and displaying the map data;
wherein the processor integrates the plurality of point cloud into at least one first point cloud set;
wherein the processor discards part of the at least one first point cloud set which comprises the at least one terrestrial information and calculates at least one second point cloud set to form at least one entity via the map data.

2. The inland river Lidar navigation system for vessel as claimed in claim 1, wherein the receiver further comprises a filter.

3. The inland river Lidar navigation system for vessel as claimed in claim 1, wherein the at least one sensor is Lidar (light detection and ranging).

4. The inland river Lidar navigation system for vessel as claimed in claim 1, wherein the map data is electronic navigational chart (ENC).

5. Operation method of inland river Lidar navigation system for vessel, comprising:
(A) providing an inland river Lidar navigation system for vessel as claimed in claim 1;
(B) receiving the plurality of point cloud generated from the at least one sensor which is configured on the vessel;
(C) the processor integrates the plurality of point cloud into the at least one first point cloud set;
(D) defining the at least one second point cloud set which is required to be processed via the at least one first point cloud set and the map data;
(E) computing a cluster by merging each of the at least one second point cloud set which are closed to each other, and forming the at least one entity;
(F) processing the at least one entity to input at least one mark in the map data; and
(G) displaying the at least one mark and the map data on the display.

6. The operation method of inland river Lidar navigation system for vessel as claimed in claim 5, wherein the step (D) further comprises:
(D1) generating a height threshold via the at least one terrestrial information;
(D2) projecting the at least one first point cloud set on the map data;
(D3) generating a border via the at least one water information; and
(D4) defining the at least one second point cloud set via discarding the at least one first point cloud set which is higher or equally higher than the height threshold and across the border in steps (D1) and (D3) respectively.

7. The operation method of inland river Lidar navigation system for vessel as claimed in claim 5, wherein the step (E) further comprises:
(E1) choosing a space point rendered from the at least one second point cloud set;
(E2) calculating a distance between any point of the at least one second point cloud set to the space point;
(E3) classifying the point which has the distance shorter or equally shorter than a distance threshold into the same entity; and
(E4) repeating executing steps (E1)-(E3) until all of the points of the at least one second point set are classified, generating plurality of the entity.

8. The operation method of inland river Lidar navigation system for vessel as claimed in claim 5, wherein the step (F) further comprises:
(F1) calculating average value of all position coordinates of any of the entity, defining the position coordinate of gravity point of any of the entity and until finishing calculating all of the entities;
(F2) featuring and representing an object data of the position coordinates of the plurality of gravity point; and
(F3) generating the at least one mark via the object data.

9. The operation method of inland river Lidar navigation system for vessel as claimed in claim 7, wherein the step (E) further comprises a step (E21) which is between the step (E2) and (E3), giving priority for concentrating the distances of the points of the at least one second point cloud set which is shorter or equally shorter than an entity threshold as the same entity, then repeating steps (E1) and (E21) respectively until the at least one second point cloud set is separated into the plurality of entities via the entity threshold.
